# EUROPEAN PATENT SPECIFICATION

(11) **EP 2 658 776 B1**
(45) Date of publication and mention of the grant of the patent: **29.03.2017**
(21) Application number: 11744111.3
(22) Date of filing: 06.06.2011
(51) Int. Cl.: B64C 39/06

(54) **THE DEVICE TO GENERATE LIFT FORCE (OPTIONS)**
VORRICHTUNG ZUR ERZEUGUNG VON HUBKRAFT (OPTIONEN)
DISPOSITIF POUR GÉNÉRER UNE FORCE DE SUSTENTATION (OPTIONS)

(30) Priority: 27.12.2010 KZ 20101787
(43) Date of publication of application: 06.11.2013
(73) Proprietor: Akhmejanov, Alibi, Uralsk City 090007 (KZ)
(72) Inventor: Akhmejanov, Alibi, Uralsk City 090007 (KZ)
(74) Representative: Jeck, Anton
(86) International application number: PCT/KZ2011/000010
(87) International publication number: WO 2012/091533

(56) References cited:
- WO-A1-2005/113981
- DE-A1-102007 004 746
- JP-A- 58 214 681
- KZ-A- 22 499
- KZ-A- 23 001
- US-A1- 2009 236 475

## Description

### Technical Field

The invention relates to the aviation and can be used in order to create lifting vehicle as well as load lifting devices.

### Background Art

It is known the device to generate lift force in the form of lifting vehicle, in which between the bottoms and the tops of round frame, which contain center superchargers in the shape of horizontally located ventilators, in the zone of annular plenum the annular wing in the form of upturned plate with a shape flat-convex in section is fixed, a lifting vehicle in order to intake air contains bottom and top air inlet ducts (a unit to connect outdoor environment), steering flappers and power device (driving motor) for a supercharger (Patent RU Nº2061627, IPC C1 5B64 C29/00 dated 10.06.1996). Lift force is derived due to the unsymmetrical flow-around of a wing (Physics encyclopedia / Head Editor A. M. Prokhorov. - Moscow: Soviet encyclopedia, 1983. - 928 pages; Krasnov N. F. Aerodynamics. Part I. Theoretic framework. Aerodynamics of a profile and a wing. Textbook for high technical schools. - M., Vysshaya Shkola, 1976. - 384 pages; Krasnov N. F. Aerodynamics Part II. Methods of aerodynamic design. Textbook for high technical schools- 3-rd edition, revised and corrected-M., Vysshaya Shkola, 1980. - 416 pages), meanwhile the above mentioned device is characterized with ineffective control of change of vector of moving, aerodynamic, composite force, including as a component a lift force, ineffective control of space motion, what is caused by restriction of degree of freedom of travel of such units as a fixed annular wing, steering flappers.

It is known the device to generate lift force (Innovation patent of Republic of Kazakhstan Nº22499, IPC B64C 29/00 dated 17.05.2010), containing a frame, a supercharger with driving motor is rigidly connected with a frame, the annular wing having in section an aerofoil profile, the frame is divided into zones in horizontal direction with partitions, and the frame together with an annular wing fixed in the zone, is divided into sectors in vertical direction with partitions, the device contains a supercharger and distribution tools in the side and in the center, in front of a leading edge of an annular wing in each sector the guiding device is installed, the device is equipped with adjusting units and the system to maintain the required working temperature of medium in the form of heat exchanger and/or inlet-exhaust tool (unit to connect outdoor environment).

The most similar analogue - prototype is two options of the device to generate lift force, the structures of which are described in the information source (Innovation patent of Republic of Kazakhstan Nº23001, IPC B64C 29/00 dated 15.10.2010) and with the help of which the realization of option of generating of lift force through medium flow arrangement in order to flow about wings over closed loop path is realized. Both options of prototype device contain tubiform frame, supercharges with driving motors, the wings having in section an aerofoil profile oriented by the leading edge to the direction of working medium exhaust out of the supercharger, adjusting units for a wing, guiding devices, each of those is installed in front of leading edge of each wing, the system to maintain the required working temperature of medium in the form of heat exchanger and/or inlet-exhaust tool (unit to connect outdoor environment). Meanwhile in case of prototype device according to the first option, it has a tubiform frame in the shape of a tore, and in case of prototype device according to the second option, it has a tubiform frame in the shape of closed volumetric loop converged without crossing in the center of device to deflect the path of working medium transmission, and it is additionally equipped with a central distribution unit, which is required to arrange medium flow along the specified closed loop path. (Here should be noted, that, although Document of title for invention (Innovation Patent of Republic of Kazakhstan Nº23001, IPC B64C 29/00 dated 15.10.2010) issued for the object «method», from this it is found out, became known a prototype device for the applied object «device». In the information source (Innovation patent of Republic of Kazakhstan Nº23001, IPC B64C 29/00 dated 15.10.2010) it is shown the description of a construction of the specified prototype device (both options), with the help of which the realization of option of generating of lift force through medium flow arrangement in order to flow about wings over closed loop path is carried out, the method of use (application), its operation (performance) id described. This prototype if the mean of the same application as a suggested invention, it is known from source (Innovation patent of Republic of Kazakhstan Nº23001, IPC B64C 29/00 dated 15.10.2010), is characterized with accumulation of characteristic features, which is the most similar to accumulation of essential features of applied object).

In the known objects superchargers can be different - centrifugal, axial etc., and a force device for superchargers can be in the form of diverse driving motors (New polytechnical dictionary / Head editor A. Yu. Ishlinskiy - Moscow: Science publishing office «Bolshaya Rossiyskaya Entsiklopediya», 2000. - 671 pages).

Common disadvantages of specified analogues are high energy losses while creating and change of vector of moving, aerodynamic, composite force, including as a component a lift force, due to increased negative effect of arising distributed aerodynamic forces on the surface of feedthrough, which arise as «induced» (or «inductive») aerodynamic forces, and increased negative effect disturbed nonstationary (turbulent) slip stream near the surface of feedthrough on the condition of flow about wings and generating of lift force. One of the main reasons of these disadvantages consists in the absence of optimization of some design parameters, which influences the nature of motion of working medium.

### Summary of Invention

The aim of invention is achieving of technical result: reduction of energy losses on the creating and change of vector of moving, aerodynamic, composite force, including as a component force a lift force. One of the means to reach this is the below introduced optimization of some design parameters, which influences the nature of motion of working medium.

The technical result in the applied first option of a device, in which the principles of invention are realized, is achieved in the fact that the device to generate lift force containing a tubiform frame in the form of a tore, supercharges with driving motors, the wings having in section an aerofoil profile oriented by the leading edge to the direction of working medium exhaust out of the supercharger, adjusting units for a wing, guiding devices, each of those is installed in front of leading edge of each wing, the system to maintain the required working temperature of medium, unit to connect outdoor environment, according to invention is equipped with more than one wing, inside the in front of the leading edge of each wing as per the method «tube in tube» rigidly connected with a frame separating tubiform elements, which separate for working medium the through passage area into peripheral and central parts are installed, meanwhile a section area of a central part of through passage area inside separating tubiform element S₁ is connected with a wing area S₂ by a condition S₁ / S₂ makes a value, which is in the limits not less 0,3 and not more 3,6, and the largest area of cross section area of a wing by a plane, passing through the longest height of wing shape, is inserted in the section of a central part of the through passage area, guiding devices are installed inside each separating tubiform element in its inlet flow part and rigidly connected with these elements, at the parts where the flow turns the additional separating tubiform elements, equipped from inside of inlet part with the system to maintain the required working temperature of medium are installed, the distance L₁ from the area of
flow outlet from the separating tubiform element up to the leading edge of a wing is connected with a wing chord b by condition L₁ makes a value, which is within the limits not less 0,8b and not more 2,5b, but a distance L₂ from a wing trailing edge up to the flow inlet into separating tubiform element or into the additional separating tubiform element makes a value, which is within the limits not less 0,7b and not more 3b, main superchargers, oriented by the working medium outlet from the supercharger toward the direction of a wing leading edge, are installed in front of the guiding devices inside the separating tubiform elements in the center and rigidly connected with these elements, meanwhile each wing complies with one main supercharger, but a peripheral superchargers, oriented by the working medium outlet from the supercharger toward the direction of a wing leading edge, are installed in the extent of area, restricted by a frame and separating tubiform elements and rigidly connected with a frame, meanwhile each wing complies with one peripheral supercharger.

The technical result in the applied second option of a device, in which the principles of invention are realized, is achieved in the fact that the device to generate lift force containing a tubiform frame in the shape of closed volumetric loop, converged without crossing in the center of device to deflect the path of working medium transmission supercharges with driving motors, the wings having in section an aerofoil profile oriented by the leading edge to the direction of working medium exhaust out of the supercharger, adjusting units for a wing, guiding devices, each of those is installed in front of leading edge of each wing, the system to maintain the required working temperature of medium, unit to connect outdoor environment, according to invention is equipped with more than one wing, inside the frame in front of the leading edge of each wing as per the method «tube in tube» rigidly connected with a frame separating tubiform elements, which separate for working medium the through passage area into peripheral and central parts are installed, meanwhile a section area of a central part of through passage area inside separating tubiform element S₁ is connected with a wing area S₂ by a condition S₁ / S₂ makes a value, which is in the limits not less 0,3 and not more 3,6, and the largest area of cross section area of a wing by a plane, passing through the longest height of wing shape, is inserted in the section of a central part of the through passage area, guiding devices are installed inside each separating tubiform element in its inlet flow part and rigidly connected with these elements, at the parts where the flow turns the additional separating tubiform elements, equipped from inside of inlet part with the system to maintain the required working temperature of medium are installed, the distance L₁ from the area of steam outlet from the separating tubiform element up to the
leading edge of a wing is connected with a wing chord b by condition L₁ makes a value, which is within the limits not less 0,8b and not more 2,5b, but a distance L₂ from a wing trailing edge up to the flow inlet into separating tubiform element or into the additional separating tubiform element makes a value, which is within the limits not less 0,7b and not more 3b, the device in the center is additionally furnished with a central distribution unit in order to change the path of peripheral and central steams, the main superchargers, oriented by the working medium outlet from the supercharger toward the direction of a wing leading edge, are installed in front of the guiding devices inside the separating tubiform elements in the center and rigidly connected with these elements, meanwhile each wing complies with one main supercharger, but a peripheral superchargers, oriented by the working medium outlet from the supercharger toward the direction of a wing leading edge, are installed in the extent of area, restricted by a frame and separating tubiform elements and rigidly connected with a frame, meanwhile each wing complies with one peripheral supercharger.

The technical result in the applied third option of a device, in which the principles of invention are realized, is achieved in the fact that the device to generate lift force containing a tubiform frame, supercharges with driving motors, the wings having in section an aerofoil profile oriented by the leading edge to the direction of working medium exhaust out of the supercharger, adjusting units for a wing, guiding devices, each of those is installed in front of leading edge of each wing, the system to maintain the required working temperature of medium, unit to connect outdoor environment, according to invention a tubiform frame has a cylindrical form with the end elements, having inside profiled surfaces in order to provide the turn back of working medium flow at 180°, the device is equipped with more than one wing; inside the frame in front of the leading edge of each wing as per the method «tube in tube» rigidly connected with a frame separating tubiform elements, which separate for working medium the through passage area into peripheral and central parts are installed, meanwhile a section area of a central part of through passage area inside separating tubiform element S₁ is connected with a wing area S₂ by a condition S₁ / S₂ makes a value, which is in the limits not less 0,3 and not more 3,6, and the largest area of cross section area of a wing by a plane, passing through the longest height of wing shape, is inserted in the section of a central part of the through passage area, guiding devices are installed inside each separating tubiform element in its inlet flow part and rigidly connected with these elements, at the parts where the flow turns the additional separating tubiform elements, equipped from inside of inlet part with the system to maintain the required working temperature of medium are installed, the distance L₁ from the area of flow outlet from the separating tubiform element up to the leading edge of a wing is connected with a wing chord b by condition L₁ makes a value, which is within the limits not less 0,8b and not more 2,5b, but a distance L₂ from a wing trailing edge up to the steam inlet into separating tubiform element or into the additional separating tubiform element makes a value, which is within the limits not less 0,7b and not more 3b, in the extent of area, restricted by a frame and separating tubiform elements, as per the method «tube in tube» the tubiform partition is installed, rigidly connected with a frame and which together with end elements serves to arrange medium closed loop path, main superchargers, oriented by the working medium outlet from the supercharger toward the direction of a wing leading edge, are installed in front of the guiding devices inside the separating tubiform elements in the center and rigidly connected with these elements, meanwhile each wing complies with one main supercharger, but a peripheral superchargers, oriented by the working medium outlet from the supercharger toward the direction of a wing leading edge, are installed in the extent of area, restricted by a tubiform partition and separating tubiform elements and rigidly connected with a frame, meanwhile each wing complies with one peripheral supercharger.

Thus, all the applied options of a device are connected between each other insomuch that they constitute the sole inventive conception.

Character of invention is explained by schematically drawings describing these three applied options, which differ as per design features depending on type of arrangement of a closed movement of a working medium in the device. Bellow the diagrams of ones of the best invention implementations are introduced.

### Brief Description of Drawings

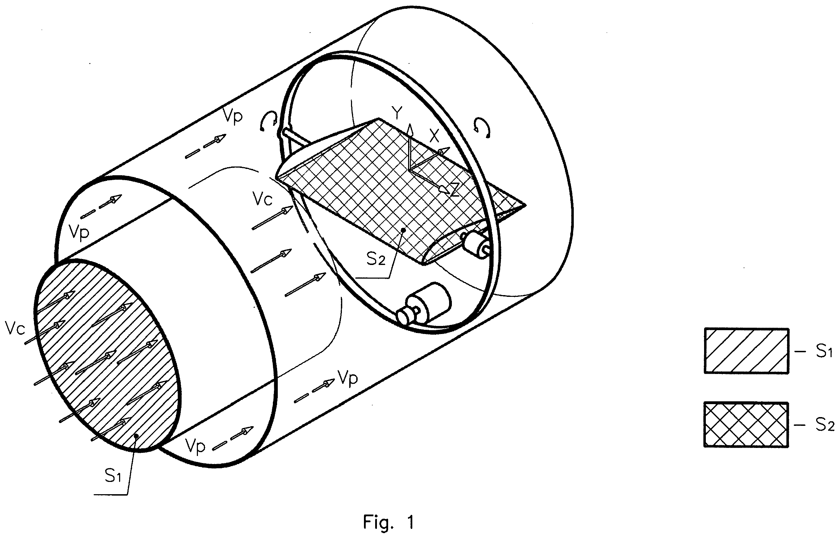

In fig. 1 the diagram of the main part of device is introduced, which is existing in all the three options of a device, in which the principle of generating and administration of aerodynamic force is shown; meanwhile areas S₁ and S₂ are graphically shown. Here should be noted, that the wing area S₂ is an area of a wing projection on a base plane of a wing and is a characteristic value (GOST 22833-77. Characteristics of an aircraft geometric. Terms, definitions and letter designation)

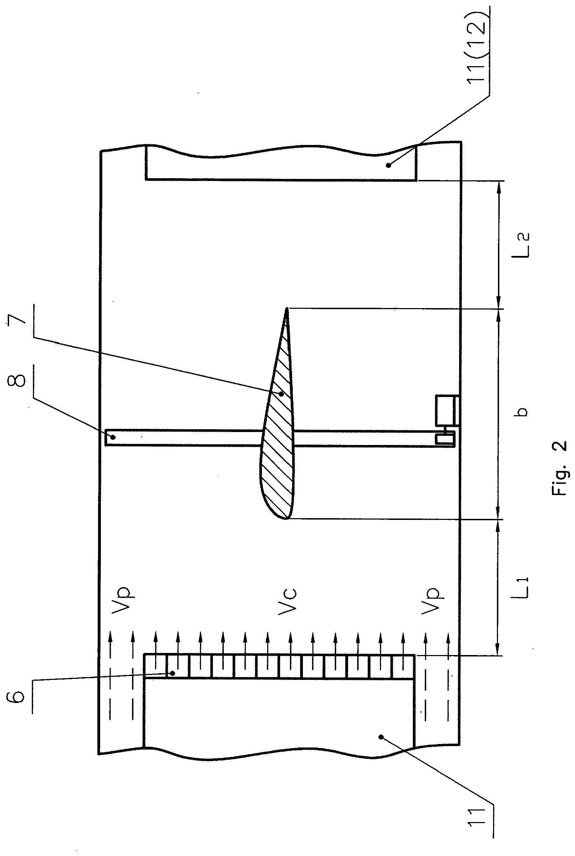

In fig. 2 the incised side view of a main part of a device is introduced, which is available in all three options of a device, and values L₁, L₂ and b are graphically shown.

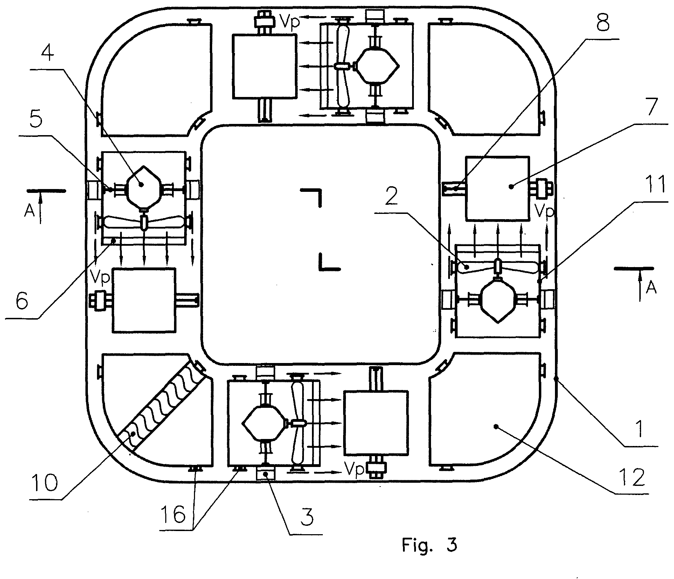

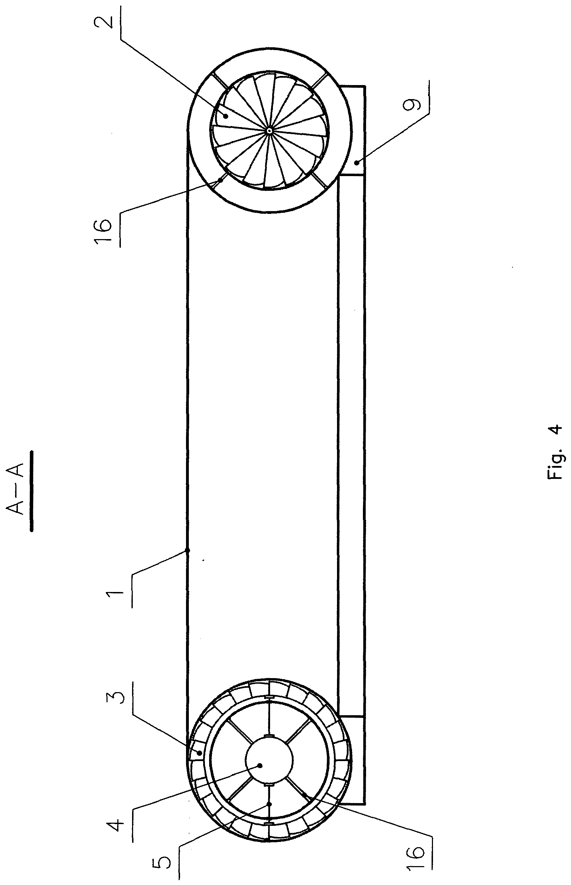

In fig. 3-4 the diagrams of a device as per the first option are introduced - accordingly incised plane view (fig.3), section view A-A (fig. 4), in this option the arrangement of medium flow along closed loop path is performed via superchargers located inside the tubiform frame in the form of a tore, in which for example, four wings and respectively other elements of a device are contained.

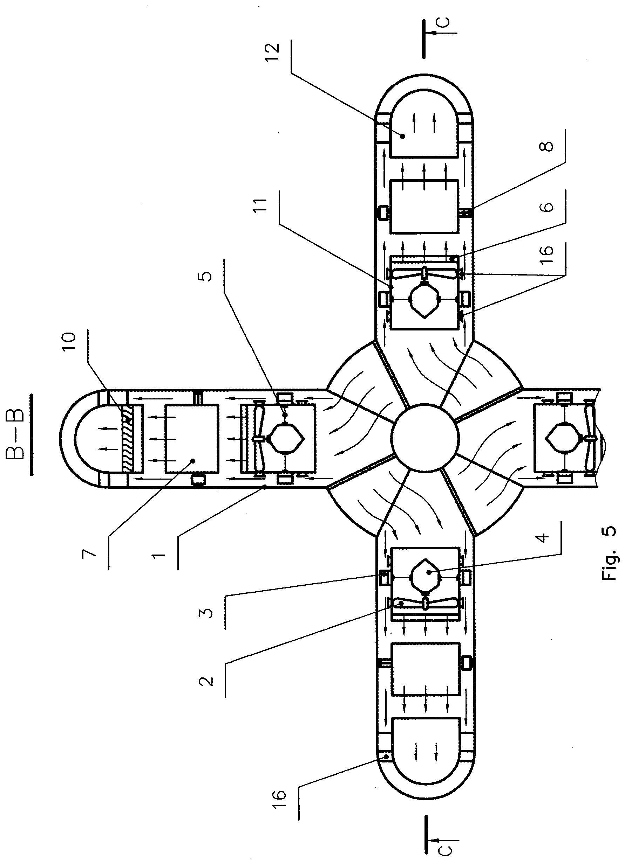

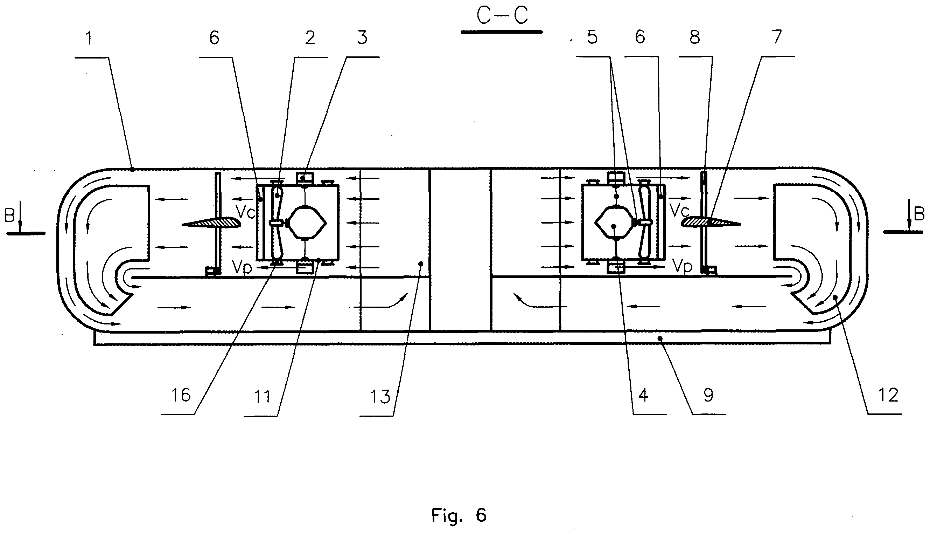

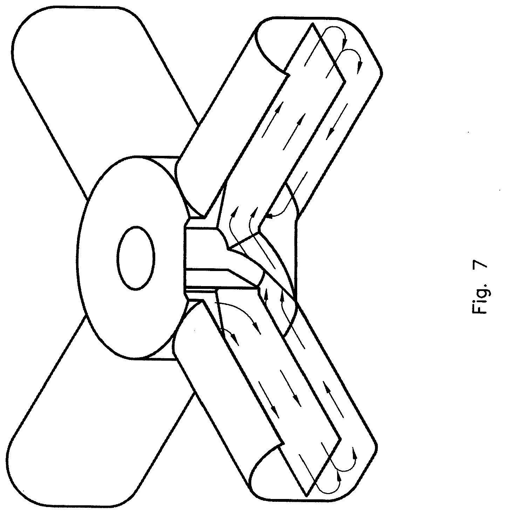

In fig. 5-7 the diagrams of a device as per the second option are introduced - accordingly incised plane view B-B (fig.5), section view C-C (fig.6), the movement of a medium flow is shown in fig.7, where only those parts of a device construction, which are sufficient to imagine the path of a flow movement are shown. In this option the movement of a medium flow along the closed loop path, converged without crossing in the center of device to deflect the path, in the shape of volumetric loop is performed, where the movement of flow, for example, is performed contra clockwise, going downwards in the peripheral part of a device and arising bottom-up turning in the central part of a device. In the device for example, four wings and respectively other elements of a device are contained.

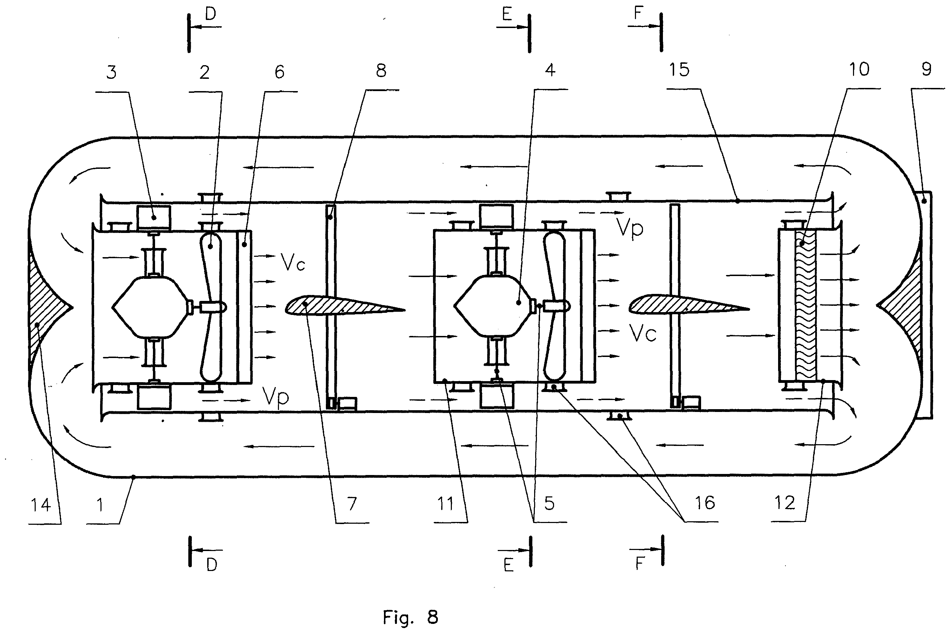

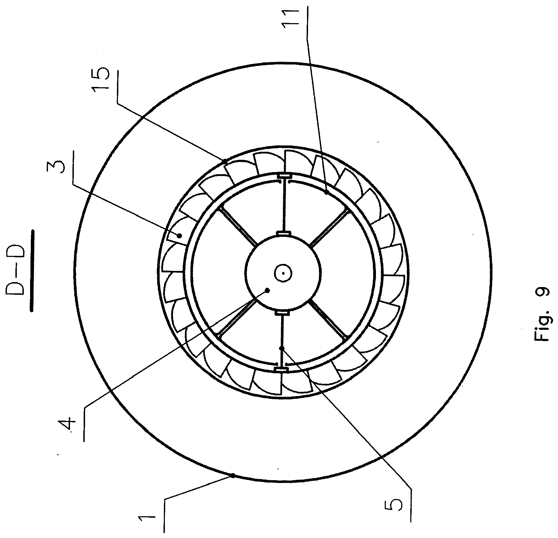

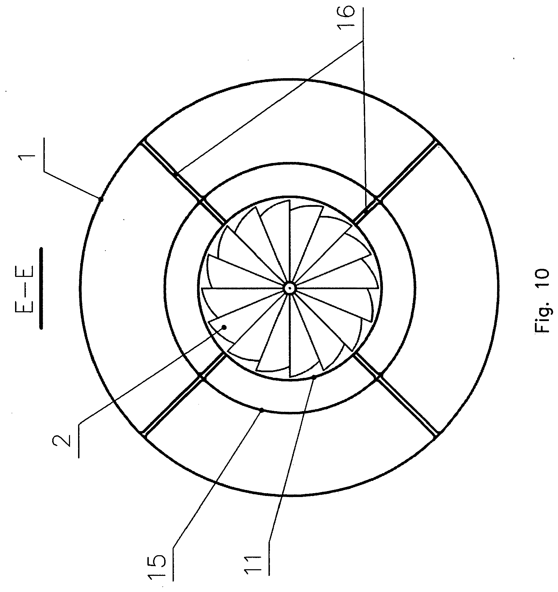

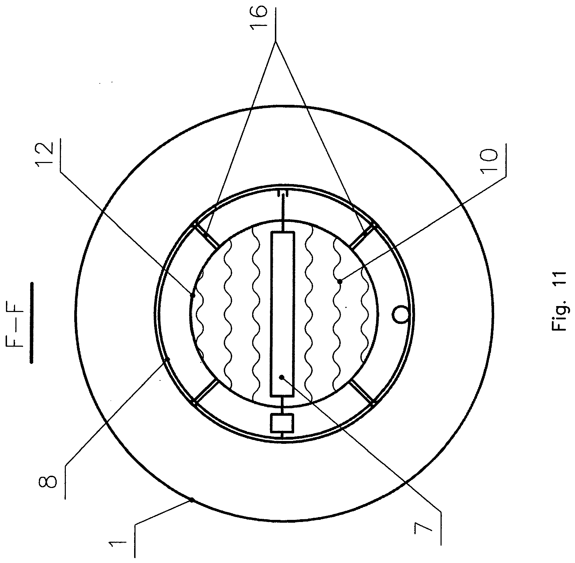

In fig. 8-11 the diagrams of a device as per the third option are introduced - accordingly incised side view (fig. 8), section view D-D (fig. 9), section view E-E (fig. 10), section view F-F (fig.11), in this option the arrangement of medium flow along closed loop path is performed via superchargers, end elements, providing the turn back of working medium flow at 180°, and tubiform partition. In the device for example, two wings and respectively other elements of a device are contained.

### Modes for Carrying out the Invention

All three options of a device contain a frame 1, main superchargers 2, peripheral superchargers 3, driving motor 4, drive shaft (power transmission) 5, guiding devices 6, wings 7, are equipped with adjusting units 8 (including special driving motors), unit to connect outdoor environment 9 (for heat and mass exchange), the system to maintain the required working temperature of medium 10, separating tubiform elements 11, additional separating tubiform elements 12.

In case of a device as per the second option it additionally has a central distributive unit to change the path of peripheral and central flow 13.

In case of a device as per the third option, it additionally equipped with end elements 14, having inside profiled surfaces in order to provide the turn back of working medium flow at 180°, profiled in such a manner, that it gives the possibility to decrease the creation of nonstationary aerodynamic processes due to flow turbulence and accordingly decrease energy losses. Furthermore, the third option of a device additionally contains tubiform partition 15, which is rigidly connected with a frame and which is together with end elements, providing the turn back of working medium flow at 180°, serves to arrange the closed loop path of a flow movement.

Main superchargers 2, peripheral superchargers 3, driving motor 4, drive shaft 5, guiding devices 6, wings 7, adjusting units 8, unit to connect outdoor environment 9, the system to maintain the required working temperature of medium 10, separating tubiform elements 11 additional separating tubiform elements 12, a central distributive unit to change the path of peripheral and central flow 13, end elements 14, tubiform partition 15 are rigidly connected with a frame 1 of a device either directly, or through the number of constructional elements for connection 16.

Device to generate lift force operates as follows.

In the process of a wing 7 flow-around with a medium flow having in section an aerofoil profile oriented by the leading edge to the direction of working medium exhaust out of the supercharger 2, the lift force is generated at it. As a wing 7 via an adjusting unit is connected with a frame 1, the net lift of wings is transferred to the frame 1.

The velocity profile of central flow is aligned with a guiding device 6, installed in front of a wing leading edge.

A frame 1 provides the movement of working medium along closed loop path. Main supercharger 2 with a driving motor 4 is a flow movement booster and imposes the flow an additional energy. A driving motor 4 is connected with main superchargers 2 via a drive shaft 5.

To generate controlled movement by means of changing the vector of moving aerodynamic net force, including as a component force a lift force, wings 7 are installed with the possibility to occupy any location inside device's frame with the help of adjusting units 8. Such factor simplifies the movement control, permits to manage it without additional aids. Moreover, this factor increases the efficiency of the device movement management, improves stability of device movement towards excitation of outdoor environment considering the capability of wings freely to orient in the axis system, connected with the device.

Under medium speed conditions due to friction, the heating of a working medium takes place. In order optimally to maintain working temperatures of medium it is stipulated joint usage of the system to maintain the required working temperature of medium (for example, heat exchanger) 10 and unit to connect outdoor environment 9. Via the unit to connect outdoor environment 9 the air from the atmosphere enters the device, the air serves as a working medium as well as cooling agent.

In case of a device as per the second option a central distributive unit 13 is used in order to arrange the movement of peripheral and central flows of medium along closed loop path, converged without crossing in the center of device to deflect the path.

In case of a device as per the third option end elements 14 and a tubiform partition 15 are used in order to arrange the movement of peripheral and central flows of medium along closed loop path.

Separating tubiform elements 11 separate through passage area for a working medium into peripheral and central parts.

Main superchargers of a central flow 2 serve to provide steady movement of a working medium in separating tubiform elements 11 with required velocity (V_{c}), but peripheral superchargers of peripheral flow 3 serve to provide the movement of working medium part hyper velocity (Vₚ) - if compare with the velocity of flow in central part (V_{c}) - in the extent of area, restricted by a frame 1 and separating tubiform elements 11 for the first and for the second option of a device or in the extent of area, restricted by a frame 1 and a tubiform partition 15 for the third option of a device, due to it negative effect of arising distributed aerodynamic forces on the surface of feedthrough, which arise as «induced» (or «inductive») aerodynamic forces, and decrease negative effect disturbed nonstationary (turbulent) flow near the surface of feedthrough on the condition of flow about wings and generating of lift force is considerably decreased. The availability of specified peripheral superchargers 3, with the help of which the movement of peripheral flow with hyper velocity - if compare with the velocity of flow in the central part of the device is provided - is one of the main essential difference of invention and contributes to unity.

In order to optimize some design characteristics for the purpose of removal of disadvantages of compared known analogues with the help of standard calculation-theoretical methods and simulated model tests approved by aerohydromechanics (Physical encyclopedia / Head editor A. M. Prokhorov. - Moscow: Soviet encyclopedia, 1983. - 928 pages; Krasnov N. F. Aerodynamics. Part I. Theoretic framework. Aerodynamics of a profile and a wing. Textbook for high technical schools. - M., Vysshaya shkola, 1976. - 384 pages; Krasnov N. F. Aerodynamics Part II. Methods of aerodynamic design. Textbook for high technical schools- 3-rd edition, revised and corrected-M., Vysshaya Shkola, 1980- 416 pages), the following stated.

Other factors being equal the ranging for proportion S₁ / S₂ in the limits not less 0,3 and not more 3,6 permits optimally to decrease negative effect disturbed nonstationary (turbulent) flow, forming near the wall of separating tubiform element on the conditions of flow around of a wing flow and generating of lift force (flow energy consumption to get over nonstationary processes, connected with turbulence, decrease as minimum to 8%).

At S₁ / S₂ less 0,3 negative effect disturbed nonstationary (turbulent) flow, forming near the wall of separating tubiform element on the conditions of flow around of a wing with a medium flow and generating of lift force considerably increases.

At S₁ / S₂ more 3, negative effect disturbed nonstationary (turbulent) flow, forming near the wall of separating tubiform element on the conditions of flow around of a wing with a medium flow and creation of lift force slightly decreases, meanwhile the material consumption of device increases, that is inadvisable.

Other factors being equal the ranging L₁ in the limits not less 0,8b and not more 2,5b if compare with other values L₁ assigns the zone of optimal values, which takes into consideration the effect of friction forces and inertial forces as well as a flow compressibility. Optimum choice of L₁ permits to negative effect disturbed nonstationary (turbulent) flow, forming near the wall of separating tubiform element on the conditions of flow around of a wing flow and generating of lift force (flow energy consumption to get over nonstationary processes, connected with turbulence, decrease as minimum to 7%).

At L₁ more 2,5b in the flow the increase of instability of speed field of medium flow is takes place due to the action of friction forces, resulting in occurrence and growth of the centers of swirl motion, generated by insufficient smoothing of a flow on the guiding device.

At L₁ less 0,8b because of flow damping capacity in front of the wing leading edge the distortion of uniform velocity space in the zone between the guiding device and leading edge, this impairs the operating conditions of the guiding device and results in the growth of a swirl potential in the flow.

Other factors being equal the ranging of L₂ in the limits not less 0,7b and not more 3b if compare with other values of L₂ assigns the zone of optimal values, which takes into consideration the effect of friction forces and inertial forces as well as a flow compressibility. Optimum choice of L₂ permits to decrease negative effect of disturbed nonstationary (turbulent) flow near the wing trailing edge on the conditions of flow around of a wing flow and generating of lift force (flow energy consumption to get over nonstationary processes, connected with turbulence, decrease as minimum to 6%).

At L₂ more 3b after flow about wing in the medium flow the instability of velocity space, generated by the swirl action, induced by flow separation from the wing trailing edge is increased as well as materials consumption of device is increased.

At L₂ less 0,7b the condition of continuity of current-flow line, which is an essential requirement in the process of the occurrence of aerodynamic forces on the wing, is not fulfilled, also in this case it is a great effect of excitations, generated by flow separation on the separating tubiform element behind the wing.

The condition, as per which the device is equipped more than one wing, stipulated by the fact that if there is one wing, the device will be not stable; the management of the forces, which take place in the device is not effective. The choice of the wings' quantity, at which the proposed device operates effectively, is connected with the assigned technical task and depends on weight, geometrical, hydro-aeromechanic parameters of elements of the device and this quantity can be specified with the help of standard calculation-theoretical methods and simulated model tests approved by aerohydromechanics (Physical encyclopedia / Head editor A. M. Prokhorov. - Moscow: Soviet encyclopedia, 1983. - 928 pages; Krasnov N. F. Aerodynamics. Part I. Theoretic framework. Aerodynamics of a profile and a wing. Textbook for high technical schools. - M., Vysshaya shkola, 1976. - 384 pages; Krasnov N. F. Aerodynamics Part II. Methods of aerodynamic design. Textbook for high technical schools- 3-rd edition, revised and corrected-M., Vysshaya Shkola, 1980- 416 pages).

## Claims

1. A device for generating a lift force comprising
a tubular frame (1) in the form of a toroid;
movers of fan-type (2, 3) comprising driving motors (4) for activating the movers of fan-type (2, 3);
wings (7) comprising an aerofoil profile pointing from the leading edge of the wing (7) to the direction of a working medium blown out from the mover of
fan-type (2, 3);
adjusting units (8) for the wing (7), allowing to control the movement of the device
by changing a position of the wing (7) in the device around an x-axis of the wing (7), which is directed from the leading edge to the trailing edge of the wing (7), and changing a wing angle of attack for the flow of working medium;
guiding devices (6), designed to direct the flow of working medium within the device on the wings (7), each of the guiding devices (6) is installed in front of the leading edge of the wing (7);
a system (10) for maintaining a required working temperature of the working medium;
a unit of valve-type for connecting to the outdoor environment, required for heat- and mass exchange with the outdoor environment, by means of this unit of valve-type air enters the device from the atmosphere, the air acts as working medium, and as cooling agent;
wherein
the device comprises more than one wing (7);
separating tubular elements (11) positioned inside the frame (1) in front of the leading edge of each wing (7) and rigidly connected with the frame (1) for dividing the area of the flow of the working medium into a peripheral and a central flowpath;
the cross-section area (S1) of the central flowpath inside the separating tubular element (11) is related to the wing area (S2) according to a ratio of 0,3 ≤ S1 / S2 ≤3,6, where the wing area S2 is the area of the wing projection on the base plane of the wing and is the standard characteristic value;
the guiding devices (6) are installed in the outlet flowpath inside each separating tubular element (11) and are rigidly connected with the separating tubular elements (11);
additional separating tubular elements (12) are installed for turning the flowpath of the working medium, inside of the additional separating tubular element (12) the system (10) for maintaining the required working temperature of the working medium is installed;
the distance L₁ from the trailing edge of separating tubular element (11), where the flow of working medium exits, up to the leading edge of the wing (7) is related to the wing-chord b according to the ratio of 0,8b ≤ L₁ ≤ 2,5b;
the distance L₂ from the trailing edge of the wing (7) up to the leading edge of the subsequent separating tubular element (11) or additional separating tubular element (12), where the flow enters, amounts to the value, which is within the limits of 0,7b ≤ L2 ≤ 3b;
the main movers of fan-type (2) are installed in front of the guiding devices (6) in the center inside the separating tubular elements (11) and are rigidly connected with the separating tubular elements (11), the front part of these main movers of fan-type (2), where the flow of working medium exits, looks towards the direction of the leading edge of the wing (7), the main movers of fan-type (2) are designed to generate the central flow and to provide for stable motion of the working medium in the separating tubular elements (11) at the required speed (Vc);
for each one corresponding wing (7) there is only one main mover of fan-type (2);
and peripheral movers of fan-type (3) are installed on the peripheral part of the device in the transit area between the frame (1) and the separating tubular elements (11) and rigidly connected with the frame (1), the front part of these peripheral movers of fan-type (3), where the flow of working medium exits, looks towards the direction of the leading edge of the wing (7), the peripheral movers of fan-type (3) are designed to generate peripheral flow and to provide for motion of this part of working medium at increased speed (Vp) in comparison with the flow speed of the central part (V_{c});
for each one corresponding wing (7) there is only one peripheral mover of fan-type (3).

2. A device for generating a lift force comprising
a tubular frame (1) in the form of a closed volumetric loop, which converges in the center of the device without crossing for deflecting the flowpath of a working medium;
movers of fan-type (2, 3) comprising driving motors (4) for activating the movers fan-type (2, 3);
wings (7) comprising an aerofoil profile pointing from the leading edge of the wing (7) to the direction of the working medium blown out from the mover of fan-type (2, 3);
adjusting units (8) for the wing (7), allowing to control the movement of the device by changing a position of the wing (7) in the device around an x-axis of the wing (7), which is directed from the leading edge to the trailing edge of the wing (7), and changing a wing angle of attack for the flow of working medium;
guiding devices (6), designed to direct the flow of working medium within the device on the wings (7), each of the guiding devices (6) is installed in front of the leading edge of the wing (7);
a system (10) for maintaining a required working temperature of the working medium;
a unit of valve-type for connecting to the outdoor environment, required for heat- and mass exchange with the outdoor environment, by means of this unit of valve-type air enters the device from the atmosphere, the air acts as working medium, and as cooling agent;
wherein
the device comprises more than one wing (7);
separating tubular elements (11) positioned inside the frame (1) in front of the leading edge of each wing (7) and rigidly connected with the frame (1) for dividing the area of the flow of the working medium into a peripheral and a central flowpath;
the cross-section area (S1) of the central flowpath inside the separating tubular element (11) is related to the wing area (S2) according to a ratio of 0,3 ≤ S1 / S2 ≤3,6, where the wing area S2 is the area of the wing projection on the base plane of the wing and is the standard characteristic value;
the guiding devices (6) are installed in the outlet flowpath inside each separating tubular element (11) and are rigidly connected with the separating tubular elements (11);
additional separating tubular elements (12) are installed for turning the flowpath of the working medium, inside of the additional separating tubular element (12) the system (10) for maintaining the required working temperature of the working medium is installed;
the distance L₁ from the trailing edge of separating tubular element (11), where the flow of working medium exits, up to the leading edge of the wing (7) is related to the wing-chord b according to the ratio of 0,8b ≤ L₁ ≤ 2,5b;
the distance L₂ from the trailing edge of the wing (7) up to the leading edge of the subsequent separating tubular element (11) or additional separating tubular element (12), where the flow enters, amounts to the value, which is within the limits of 0,7b ≤ L₂ ≤ 3b;
the device additionally comprises in the center a central distribution unit (13) for changing the path of the peripheral and the central flow of the working medium;
the main movers of fan-type (2) are installed in front of the guiding devices (6) in the center inside the separating tubular elements (11) and are rigidly connected with the separating tubular elements (11), the front part of these main movers of fan-type (2), where the flow of working medium exits, looks towards the direction of the leading edge of the wing (7), the main movers of fan-type (2) are designed to generate the central flow and to provide for stable motion of the working medium in the separating tubular elements (11) at the required speed (Vc);
for each one corresponding wing (7) there is only one main mover of fan-type (2);
and peripheral movers of fan-type (3) are installed on the peripheral part of the device in the transit area between the frame (1) and the separating tubular elements (11) and rigidly connected with the frame (1), the front part of these peripheral movers of fan-type (3), where the flow of working medium exits, looks towards the direction of the leading edge of the wing (7), the peripheral movers of fan-type (3) are designed to generate peripheral flow and to provide for motion of this part of working medium at increased speed (Vp) in comparison with the flow speed of the central part (V_{c});
for each one corresponding wing (7) there is only one peripheral mover of fan-type (3).

3. A device for generating a lift force comprising
a tubular frame (1);
movers of fan-type (2, 3) comprising driving motors (4) for activating the movers fan-type (2, 3);
wings (7) comprising an aerofoil profile pointing from the leading edge of the wing (7) to the direction of the working medium blown out from the mover of fan-type (2, 3);
adjusting units (8) for the wing (7), allowing to control the movement of the device by changing a position of the wing (7) in the device around an x-axis of the wing (7), which is directed from the leading edge to the trailing edge of the wing (7), and changing a wing angle of attack for the flow of working medium;
guiding devices (6), designed to direct the flow of working medium within the device on the wings (7), each of the guiding devices (6) is installed in front of the leading edge of the wing (7);
a system (10) for maintaining a required working temperature of the working medium;
a unit of valve-type for connecting to the outdoor environment, required for heat- and mass exchange with the outdoor environment, by means of this unit of valve-type air enters the device from the atmosphere, the air acts as working medium, and as cooling agent;
wherein
the tubular frame (1) has a cylindrical form comprising end elements (14), the end elements (14) comprise profiled surfaces in order to allow a turn-back of the flow of the working medium with an angle of 180°; the device comprises more than one wing (7);
separating tubular elements (11) positioned inside the frame (1) in front of the leading edge of each wing (7) and rigidly connected with the frame (1) for dividing the area of the flow of the working medium into a peripheral and a central flowpath;
the cross-section area (S1) of the central flowpath inside the separating tubular element (11) is related to the wing area (S2) according to a ratio of 0,3 ≤ S1 / S2 ≤3,6, where the wing area S2 is the area of the wing projection on the base plane of the wing and is the standard characteristic value;
the guiding devices (6) are installed in the outlet flowpath inside each separating tubular element (11) and are rigidly connected with the separating tubular elements (11);
additional separating tubular elements (12) are installed for turning the flowpath of the working medium, inside of an additional separating tubular element (12) the system (10) for maintaining the required working temperature of the working medium is installed;
the distance L₁ from the trailing edge of separating tubular element (11), where the flow of working medium exits, up to the leading edge of the wing (7) is related to the wing-chord b according to the ratio of 0,8b ≤ L₁ ≤ 2,5b;
the distance L₂ from the trailing edge of the wing (7) up to the leading edge of the subsequent separating tubular element (11) or additional separating tubular element (12), where the flow enters, amounts to the value, which is within the limits of 0,7b ≤ L₂ ≤ 3b;
the tubular partition (15) is installed in the extent of area restricted by the frame (1) and the separating tubular elements (11) and rigidly connected with the frame (1), the tubular partition (15) together with the end elements (14) provide a closed loop path for the working medium; the main movers of fan-type (2) are installed in front of the guiding devices (6) in the center inside the separating tubular elements (11) and are rigidly connected with the separating tubular elements (11), the front part of these main movers of fan-type (2), where the flow of working medium exits, looks towards the direction of the leading edge of the wing (7), the main movers of fan-type (2) are designed to generate the central flow and to provide for stable motion of the working medium in the separating tubular elements (11) at the required speed (Vc);
for each one corresponding wing (7) there is only one main mover of fan-type (2);
and peripheral movers of fan-type (3) are installed on the peripheral part of the device in the transit area between the tubular partition (15) and the separating tubular elements (11) and rigidly connected with the tubular partition (15), the front part of these peripheral movers of fan-type (3), where the flow of working medium exits, looks towards the direction of the leading edge of the wing (7), the peripheral movers of fan-type (3) are designed to generate peripheral flow and to provide for motion of this part of working medium at increased speed (Vp) in comparison with the flow speed of the central part (V_{c});
for each one corresponding wing (7) there is only one peripheral mover of fan-type (3).

## Patentansprüche

1. Vorrichtung zur Erzeugung einer Hubkraft mit
einem rohrförmigen Rahmen (1) in Form eines Toroids,
Luftbewegern vom Gebläsetyp (2, 3), die zur Aktivierung Antriebsmotoren (4) aufweisen,
Flügeln (7), die ein aerodynamisches Profil aufweisen, das von der Vorderkante des Flügels zur Richtung eines Arbeitsmediums zeigt, das von den Luftbewegern vom Gebläsetyp (2, 3) ausgeblasen wird,
Einstelleinheiten (8) für den Flügel (7), die die Steuerung der Bewegung der Vorrichtung dadurch, dass die Stellung des Flügels in der Vorrichtung um eine x-Achse des Flügels (7) geändert wird, die von der Vorderkante zur Abfallkante des Flügels (7) gerichtet ist, und dadurch gestatten, dass der Flügelangriffswinkel für den Fluss des Arbeitsmediums geändert wird,
Führungsmittel (6), die dafür bestimmt sind, den Fluss des Arbeitsmediums innerhalb der Vorrichtung auf die Flügel (7) zu lenken, wobei jedes der Führungsmittel (6) vor der Vorderkante des Flügels (7) installiert ist,
einem System (10) zur Aufrechterhaltung einer erforderlichen Arbeitstemperatur des Arbeitsmediums,
einer Einheit eines Ventiltyps zur Verbindung mit der Außenumgebung, wobei diese Einheit für den Wärme- und Massenaustausch mit der Außenumgebung erforderlich ist und Luft aus der Atmosphäre zur Vorrichtung schickt, wobei die Luft als Arbeitsmedium und Kühlmittel dient,
**dadurch gekennzeichnet,**
**dass** die Vorrichtung mehr als einen Flügel (7) aufweist,
**dass** rohrförmige Trennelemente (11) innerhalb des Rahmens (1) vor der Vorderkante eines jeden Flügels angeordnet sind und mit dem Rahmen (1) zur Teilung des Bereichs des Flusses des Arbeitsmediums in einen peripheren Flussweg und eine zentralen Flussweg fest verbunden sind,
**dass** die Querschnittsfläche (S1) des zentralen Flusswegs innerhalb des rohrförmigen Trennelements (11) auf die Flügelfläche im Verhältnis 0,3 ≤ S1 / S2 ≤ 3,6 bezogen ist, wobei die Flügelfläche S2 die Projektion der Basisebene des Flügels und der charakteristische Standardwert ist,
**dass** die Führungsmittel (6) im Ausgang des Flusswegs innerhalb jedes rohrförmigen Trennelements (11) installiert und fest mit dem rohrförmigen Trennelement (11) verbunden ist,
**dass** zusätzliche, rohrförmige Trennelemente (12) zur Drehung des Flusswegs des Arbeitsmediums innerhalb des zusätzlichen, rohrförmigen Trennelements (12) des Systems (10) zur Aufrechterhaltung der erforderlichen Arbeitstemperatur des Arbeitsmediums installiert sind,
**dass** der Abstand (L₁) von der Abfallkante des rohrförmigen Trennelements (11) dort, wo der Fluss des Arbeitsmediums hinausgeht, bis zur Vorderkante des Flügels (7) auf die Flügelsehne (b) gemäß dem Verhältnis 0,8b ≤ L₁ ≤ 2,5b bezogen ist,
**dass** der Abstand (L₂) von der Abfallkante des Flügels (7) bis zur Vorderkante des folgenden, rohrförmigen Trennelements (11) oder des zusätzlichen, rohrförmigen Trennelements (12) dort, wo der Fluss eintritt, dem Wert entspricht, der innerhalb der Grenzen von 0,7b ≤ L₂ ≤ 3b liegt,
**dass** die Hauptluftbeweger vom Gebläsetyp (2) vor den Führungsmitteln (6) in der Mitte innerhalb der rohrförmigen Trennelemente (11) installiert und fest mit den rohrförmigen Trennelementen (11) verbunden sind, wobei das Vorderteil dieser Hauptluftbeweger vom Gebläsetyp (2) dort, wo der Fluss des Arbeitsmediums hinausgeht, auf die Richtung der Vorderkante des Flügels (7) sieht, wobei die Hauptluftbeweger vom Gebläsetyp (2) derart beschaffen sind, dass sie den zentralen Fluss erzeugen und für eine stabile Bewegung des Arbeitsmediums in den rohrförmigen Trennelementen (11) bei der erforderlichen Geschwindigkeit (Vc) sorgen,
**dass** für jeden entsprechenden Flügel (7) nur ein Hauptluftbeweger vom Gebläsetyp (2) vorgesehen ist,
**dass** periphere Luftbeweger vom Gebläsetyp (3) auf dem peripheren Teil der Vorrichtung auf der Übergangsfläche zwischen dem Rahmen (1) und den rohrförmigen Trennelementen (11) installiert und mit dem Rahmen (1) fest verbunden sind, wobei das Vorderteil dieser peripheren Luftbeweger vom Gebläsetyp (3) dort, wo der Fluss des Arbeitsmediums hinausgeht, auf die Richtung der Vorderkante des Flügels (7) sieht und wobei die peripheren Luftbeweger vom Gebläsetyp (3) derart beschaffen sind, dass sie den peripheren Fluss erzeugen und für die Bewegung dieses Teils des Arbeitsmediums bei erhöhter Geschwindigkeit (Vp) im Vergleich mit der Flussgeschwindigkeit des zentralen Teils (V_{c}) sorgen, und
**dass** für jeden entsprechenden Flügel (7) nur ein peripherer Luftbeweger vom Gebläsetyp (3) vorgesehen ist.

2. Vorrichtung zur Erzeugung einer Hubkraft mit
einem rohrförmigen Rahmen (1) in Form einer geschlossenen, volumetrischen Schleife, die in der Mitte der Vorrichtung zusammenläuft, ohne in eine Kreuzung mit dem Flussweg eines Arbeitsmediums abzuweichen,
dass die Luftbeweger vom Gebläsetyp (2, 3) Antriebsmotoren (4) zur Aktivierung der Luftbeweger (2, 3) vom Gebläsetyp aufweisen,
Flügeln (7), die ein aerodynamisches Profil aufweisen, das von der Vorderkante des Flügels zur Richtung eines Arbeitsmediums zeigt, das von den Luftbewegern vom Gebläsetyp (2, 3) ausgeblasen wird,
Einstelleinheiten (8) für den Flügel (7), die die Steuerung der Bewegung der Vorrichtung dadurch, dass die Stellung des Flügels in der Vorrichtung um eine x-Achse des Flügels (7) geändert wird, die von der Vorderkante zur Abfallkante des Flügels (7) gerichtet ist, und dadurch gestatten, dass der Flügelangriffswinkel für den Fluss des Arbeitsmediums geändert wird,
Führungsmittel (6), die dafür bestimmt sind, den Fluss des Arbeitsmediums innerhalb der Vorrichtung auf die Flügel (7) zu lenken, wobei jedes der Führungsmittel (6) vor der Vorderkante des Flügels (7) installiert ist,
einem System (10) zur Aufrechterhaltung einer erforderlichen Arbeitstemperatur des Arbeitsmediums,
einer Einheit eines Ventiltyps zur Verbindung mit der Außenumgebung, wobei diese Einheit für den Wärme- und Massenaustausch mit der Außenumgebung erforderlich ist und Luft aus der Atmosphäre zur Vorrichtung schickt, wobei die Luft als Arbeitsmedium und Kühlmittel dient,
**dadurch gekennzeichnet,**
**dass** die Vorrichtung mehr als einen Flügel (7) aufweist,
**dass** rohrförmige Trennelemente (11) innerhalb des Rahmens (1) vor der Vorderkante eines jeden Flügels angeordnet sind und mit dem Rahmen (1) zur Teilung des Bereichs des Flusses des Arbeitsmediums in einen peripheren Flussweg und eine zentralen Flussweg fest verbunden sind,
**dass** die Querschnittsfläche (S1) des zentralen Flusswegs innerhalb des rohrförmigen Trennelements (11) auf die Flügelfläche im Verhältnis 0,3 ≤ S1 / S2 ≤ 3,6 bezogen ist, wobei die Flügelfläche (S2) die Projektion der Basisebene des Flügels und der charakteristische Standardwert ist,
**dass** die Führungsmittel (6) im Ausgang des Flusswegs innerhalb jedes rohrförmigen Trennelements (11) installiert und fest mit dem rohrförmigen Trennelement (11) verbunden ist,
**dass** zusätzliche, rohrförmige Trennelemente (12) zur Drehung des Flusswegs des Arbeitsmediums innerhalb des zusätzlichen, rohrförmigen Trennelements (12) des Systems (10) zur Aufrechterhaltung der erforderlichen Arbeitstemperatur des Arbeitsmediums installiert sind,
**dass** der Abstand (L₁) von der Abfallkante des rohrförmigen Trennelements (11) dort, wo der Fluss des Arbeitsmediums hinausgeht, bis zur Vorderkante des Flügels (7) auf die Flügelsehne (b) gemäß dem Verhältnis 0,8b ≤ L₁ ≤ 2,5b bezogen ist,
**dass** der Abstand (L₂) von der Abfallkante des Flügels (7) bis zur Vorderkante des folgenden, rohrförmigen Trennelements (11) oder des zusätzlichen, rohrförmigen Trennelements (12) dort, wo der Fluss eintritt, dem Wert entspricht, der innerhalb der Grenzen von 0,7b ≤ L₂ ≤ 3b liegt,
**dass** die Vorrichtung zusätzlich in der Mitte eine zentrale Verteileinheit (13) zur Änderung des Wegs des peripheren und zentralen Flusses des Arbeitsmediums aufweist,
**dass** die Hauptluftbeweger vom Gebläsetyp (2) vor den Führungsmitteln (6) in der Mitte innerhalb der rohrförmigen Trennelemente (11) installiert und fest mit den rohrförmigen Trennelementen (11) verbunden sind, wobei das Vorderteil dieser Hauptluftbeweger vom Gebläsetyp (2) dort, wo der Fluss des Arbeitsmediums hinausgeht, auf die Richtung der Vorderkante des Flügels (7) sieht, wobei die Hauptluftbeweger vom Gebläsetyp (2) derart beschaffen sind, dass sie den zentralen Fluss erzeugen und für eine stabile Bewegung des Arbeitsmediums in den rohrförmigen Trennelementen (11) bei der erforderlichen Geschwindigkeit (Vc) sorgen,
**dass** für jeden entsprechenden Flügel (7) nur ein Hauptluftbeweger vom Gebläsetyp (2) vorgesehen ist,
**dass** periphere Luftbeweger vom Gebläsetyp (3) auf dem peripheren Teil der Vorrichtung auf der Übergangsfläche zwischen dem Rahmen (1) und den rohrförmigen Trennelementen (11) installiert und mit dem Rahmen (1) fest verbunden sind, wobei das Vorderteil dieser peripheren Luftbeweger vom Gebläsetyp (3) dort, wo der Fluss des Arbeitsmediums hinausgeht, auf die Richtung der Vorderkante des Flügels (7) sieht, und wobei die peripheren Luftbeweger vom Gebläsetyp (3) derart beschaffen sind, dass sie den peripheren Fluss erzeugen und für die Bewegung dieses Teils des Arbeitsmediums bei erhöhter Geschwindigkeit (Vp) im Vergleich mit der Flussgeschwindigkeit des zentralen Teils (V_{c}) sorgen, und
**dass** für jeden entsprechenden Flügel (7) nur ein peripherer Luftbeweger vom Gebläsetyp (3) vorgesehen ist.

3. Vorrichtung zur Erzeugung einer Hubkraft mit
einem rohrförmigen Rahmen (1),
Luftbewegern vom Gebläsetyp (2, 3), die zur Aktivierung Antriebsmotoren (4) aufweisen,
Flügeln (7), die ein aerodynamisches Profil aufweisen, das von der Vorderkante des Flügels zur Richtung eines Arbeitsmediums zeigt, das von den Luftbewegern vom Gebläsetyp (2, 3) ausgeblasen wird,
Einstelleinheiten (8) für den Flügel (7), die die Steuerung der Bewegung der Vorrichtung dadurch, dass die Stellung des Flügels in der Vorrichtung um eine x-Achse des Flügels (7) geändert wird, die von der Vorderkante zur Abfallkante des Flügels (7) gerichtet ist, und dadurch gestatten, dass der Flügelangriffswinkel für den Fluss des Arbeitsmediums geändert wird,
Führungsmittel (6), die dafür bestimmt sind, den Fluss des Arbeitsmediums innerhalb der Vorrichtung auf die Flügel (7) zu lenken, wobei jedes der Führungsmittel (6) vor der Vorderkante des Flügels (7) installiert ist,
einem System (10) zur Aufrechterhaltung einer erforderlichen Arbeitstemperatur des Arbeitsmediums,
einer Einheit eines Ventiltyps zur Verbindung mit der Außenumgebung, wobei diese Einheit für den Wärme- und Massenaustausch mit der Außenumgebung erforderlich ist und Luft aus der Atmosphäre zur Vorrichtung schickt, wobei die Luft als Arbeitsmedium und Kühlmittel dient,
**dadurch gekennzeichnet,**
**dass** der rohrförmige Rahmen (1) eine zylindrische Form mit Endelementen (14) aufweist, die profilierte Flächen besitzen, um eine Rückdrehung des Flusses des Arbeitsmediums um einen Winkel von 180° zu erlauben,
**dass** die Vorrichtung mehr als einen Flügel (7) aufweist,
**dass** rohrförmige Trennelemente (11) innerhalb des Rahmens (1) vor der Vorderkante eines jeden Flügels angeordnet sind und mit dem Rahmen (1) zur Teilung des Bereichs des Flusses des Arbeitsmediums in einen peripheren Flussweg und eine zentralen Flussweg fest verbunden sind,
**dass** die Querschnittsfläche (S1) des zentralen Flusswegs innerhalb des rohrförmigen Trennelements (11) auf die Flügelfläche im Verhältnis 0,3 ≤ S1 / S2 ≤ 3,6 bezogen ist, wobei die Flügelfläche (S2) die Projektion der Basisebene des Flügels und der charakteristische Standardwert ist,
**dass** die Führungsmittel (6) im Ausgang des Flusswegs innerhalb jedes rohrförmigen Trennelements (11) installiert und fest mit dem rohrförmigen Trennelement (11) verbunden ist,
**dass** zusätzliche, rohrförmige Trennelemente (12) zur Drehung des Flusswegs des Arbeitsmediums innerhalb des zusätzlichen, rohrförmigen Trennelements (12) des Systems (10) zur Aufrechterhaltung der erforderlichen Arbeitstemperatur des Arbeitsmediums installiert sind,
**dass** der Abstand (L₁) von der Abfallkante des rohrförmigen Trennelements (11) dort, wo der Fluss des Arbeitsmediums hinausgeht, bis zur Vorderkante des Flügels (7) auf die Flügelsehne (b) gemäß dem Verhältnis 0,8b ≤L₁ ≤2,5b bezogen ist,
**dass** der Abstand (L₂) von der Abfallkante des Flügels (7) bis zur Vorderkante des folgenden, rohrförmigen Trennelements (11) oder des zusätzlichen, rohrförmigen Trennelements (12) dort, wo der Fluss eintritt, dem Wert entspricht, der innerhalb der Grenzen von 0,7b ≤ L₂ ≤3b liegt,
**dass** die rohrförmige Aufteilung (15) im Ausmaß der Fläche, die durch den Rahmen (1) und die rohrförmigen Trennelemente (11) beschränkt und mit dem Rahmen (1) fest verbunden ist, wobei die rohrförmige Aufteilung (15) zusammen mit Endelementen (14) einen geschlossenen Schleifenweg für das Arbeitsmedium bilden,
**dass** Hauptluftbeweger vom Gebläsetyp (2) vor den Führungsmitteln (6) in der Mitte innerhalb der rohrförmigen Trennelemente (11) installiert und fest mit den rohrförmigen Trennelementen (11) verbunden sind, wobei das Vorderteil dieser Hauptluftbeweger vom Gebläsetyp (2) dort, wo der Fluss des Arbeitsmediums hinausgeht, auf die Richtung der Vorderkante des Flügels (7) sieht, wobei die Hauptluftbeweger vom Gebläsetyp (2) derart beschaffen sind, dass sie den zentralen Fluss erzeugen und für eine stabile Bewegung des Arbeitsmediums in den rohrförmigen Trennelementen (11) bei der erforderlichen Geschwindigkeit (Vc) sorgen,
**dass** für jeden entsprechenden Flügel (7) nur ein Hauptluftbeweger vom Gebläsetyp (2) vorgesehen ist,
**dass** periphere Luftbeweger vom Gebläsetyp (3) auf dem peripheren Teil der Vorrichtung auf der Übergangsfläche zwischen dem Rahmen (1) und den rohrförmigen Trennelementen (11) installiert und mit dem Rahmen (1) fest verbunden sind, wobei das Vorderteil dieser peripheren Luftbeweger vom Gebläsetyp (3) dort, wo der Fluss des Arbeitsmediums hinausgeht, auf die Richtung der Vorderkante des Flügels (7) sieht und wobei die peripheren Luftbeweger vom Gebläsetyp (3) derart beschaffen sind, dass sie den peripheren Fluss erzeugen und für die Bewegung dieses Teils des Arbeitsmediums bei erhöhter Geschwindigkeit (Vₚ) im Vergleich mit der Flussgeschwindigkeit des zentralen Teils (V_{c}) sorgen, und
**dass** für jeden entsprechenden Flügel (7) nur ein peripherer Luftbeweger vom Gebläsetyp (3) vorgesehen ist.

## Revendications

1. Dispositif destiné à générer une force de sustentation comprenant une structure tubulaire (1) sous la forme d'un tore ;
des mécanismes de type ventilateur (2, 3) comprenant des moteurs d'entraînement (4) destinés à activer les mécanismes de type ventilateur (2, 3) ; des ailes (7) comprenant un profil aérodynamique pointant à partir du bord d'attaque de l'aile (7) dans la direction d'un fluide moteur soufflé hors du mécanisme de type ventilateur (2, 3) ;
des unités d'ajustement (8) pour l'aile (7), permettant de commander le mouvement du dispositif en modifiant une position de l'aile (7) dans le dispositif autour d'un axe x de l'aile (7), qui est dirigé du bord d'attaque jusqu'au bord de fuite de l'aile (7), et en modifiant un angle d'attaque d'aile pour l'écoulement du fluide moteur ;
des dispositifs de guidage (6), conçus pour diriger l'écoulement du fluide moteur dans le dispositif sur les ailes (7), chacun des dispositifs de guidage (6) est installé devant le bord d'attaque de l'aile (7) ;
un système (10) destiné à maintenir une température de travail requise du fluide moteur ;
une unité de type valve destinée à une connexion à l'environnement extérieur, requise pour un échange de chaleur et de masse avec l'environnement extérieur, au moyen de cette unité de type valve de l'air entre dans le dispositif à partir de l'atmosphère, l'air agit comme un fluide moteur, et comme un agent de refroidissement ;
dans lequel
le dispositif comprend plus d'une aile (7) ;
des éléments tubulaires de séparation (11) positionnés à l'intérieur de la structure (1) devant le bord d'attaque de chaque aile (7) et connectés de manière rigide à la structure (1) pour séparer la zone de l'écoulement du fluide moteur en un trajet d'écoulement périphérique et central ;
la surface de section transversale (S1) de l'écoulement de trajet central à l'intérieur de l'élément tubulaire de séparation (11) est liée à la surface d'aile (S2) suivant un rapport de 0,3 ≤ S1 / S2 ≤ 3,6, où la surface d'aile S2 est la surface de la projection d'aile sur le plan de base de l'aile et est la valeur caractéristique standard ;
les dispositifs de guidage (6) sont installés dans le trajet d'écoulement de sortie à l'intérieur de chaque élément tubulaire de séparation (11) et sont connectés de manière rigide aux éléments tubulaires de séparation (11) ;
des éléments tubulaires de séparation supplémentaires (12) sont installés pour faire tourner le trajet d'écoulement du fluide moteur, à l'intérieur de l'élément tubulaire de séparation supplémentaire (12) le système (10) destiné à maintenir la température de travail requise du fluide moteur est installé ;
la distance L₁ entre le bord de fuite de l'élément tubulaire de séparation (11), où l'écoulement de fluide moteur sort, et le bord d'attaque de l'aile (7) est liée à la corde d'aile b selon le rapport de 0,8b ≤ L₁ ≤ 2,5b ;
la distance L₂ entre le bord de fuite de l'aile (7) et le bord d'attaque de l'élément tubulaire de séparation (11) suivant ou de l'élément tubulaire de séparation supplémentaire (12), où l'écoulement entre, correspond à la valeur, qui est dans les limites de 0,7b ≤ L₂ ≤ 3b ;
les mécanismes de type ventilateur principaux (2) sont installés devant les dispositifs de guidage (6) au centre à l'intérieur des éléments tubulaires de séparation (12) et sont connectés de manière rigide aux éléments tubulaires de séparation (11), la partie avant de ces mécanismes de type ventilateur principaux (2), où l'écoulement du fluide moteur sort, regarde dans la direction du bord d'attaque de l'aile (7), les mécanismes de type ventilateur principaux (2) sont conçus pour générer l'écoulement central et pour fournir un mouvement stable du fluide moteur dans les éléments tubulaires de séparation (11) à la vitesse requise (Vc) ;
pour chaque aile (7) correspondante il n'y a qu'un seul mécanisme de type ventilateur principal (2);
et des mécanismes de type ventilateur périphériques (3) sont installés sur la partie périphérique du dispositif dans la zone de transit entre la structure (1) et les éléments tubulaires de séparation (11) et sont connectés de manière rigide à la structure (1), la partie avant de ces mécanismes de type ventilateur périphériques (3), où l'écoulement du fluide moteur sort, regarde dans la direction du bord d'attaque de l'aile (7), les mécanismes de type ventilateur périphériques (3) sont conçus pour générer un écoulement périphérique et pour fournir un mouvement de cette partie du fluide moteur à une vitesse accrue (Vₚ) par comparaison avec la vitesse d'écoulement de la partie centrale (Vc) ;
pour chaque aile (7) correspondante il n'y a qu'un seul mécanisme de type ventilateur périphérique (3).

2. Dispositif destiné à générer une force de sustentation comprenant une structure tubulaire (1) sous la forme d'une boucle volumétrique fermée, qui converge au centre du dispositif sans croisement pour dévier le trajet d'écoulement d'un fluide moteur ;
des mécanismes de type ventilateur (2, 3) comprenant des moteurs d'entraînement (4) destinés à activer les mécanismes de type ventilateur (2, 3) ; des ailes (7) comprenant un profil aérodynamique pointant à partir du bord d'attaque de l'aile (7) dans la direction du fluide moteur soufflé hors du mécanisme de type ventilateur (2, 3) ;
des unités d'ajustement (8) pour l'aile (7), permettant de commander le mouvement du dispositif en modifiant une position de l'aile (7) dans le dispositif autour d'un axe x de l'aile (7), qui est dirigé du bord d'attaque jusqu'au bord de fuite de l'aile (7), et en modifiant un angle d'attaque d'aile pour l'écoulement du fluide moteur ;
des dispositifs de guidage (6), conçus pour diriger l'écoulement du fluide moteur dans le dispositif sur les ailes (7), chacun des dispositifs de guidage (6) est installé devant le bord d'attaque de l'aile (7) ;
un système (10) destiné à maintenir une température de travail requise du fluide moteur ;
une unité de type valve destinée à une connexion à l'environnement extérieur, requise pour un échange de chaleur et de masse avec l'environnement extérieur, au moyen de cette unité de type valve de l'air entre dans le dispositif à partir de l'atmosphère, l'air agit comme un fluide moteur, et comme un agent de refroidissement ;
dans lequel
le dispositif comprend plus d'une aile (7) ;
des éléments tubulaires de séparation (11) positionnés à l'intérieur de la structure (1) devant le bord d'attaque de chaque aile (7) et connectés de manière rigide à la structure (1) pour séparer la zone de l'écoulement du fluide moteur en un trajet d'écoulement périphérique et central ;
la surface de section transversale (S1) de l'écoulement de trajet central à l'intérieur de l'élément tubulaire de séparation (11) est liée à la surface d'aile (S2) suivant un rapport de 0,3 ≤ S1 / S2 ≤ 3,6, où la surface d'aile S2 est la surface de la projection d'aile sur le plan de base de l'aile et est la valeur caractéristique standard ;
les dispositifs de guidage (6) sont installés dans le trajet d'écoulement de sortie à l'intérieur de chaque élément tubulaire de séparation (11) et sont connectés de manière rigide aux éléments tubulaires de séparation (11) ;
des éléments tubulaires de séparation supplémentaires (12) sont installés pour faire tourner le trajet d'écoulement du fluide moteur, à l'intérieur de l'élément tubulaire de séparation supplémentaire (12) le système (10) destiné à maintenir la température de travail requise du fluide moteur est installé ;
la distance L₁ entre le bord de fuite de l'élément tubulaire de séparation (11), où l'écoulement de fluide moteur sort, et le bord d'attaque de l'aile (7) est liée à la corde d'aile b selon le rapport de 0,8b ≤ L₁ ≤ 2,5b ;
la distance L₂ entre le bord de fuite de l'aile (7) et le bord d'attaque de l'élément tubulaire de séparation (11) suivant ou de l'élément tubulaire de séparation supplémentaire (12), où l'écoulement entre, correspond à la valeur, qui est dans les limites de 0,7b ≤ L₂ ≤ 3b ;
le dispositif comprend de plus au centre une unité de répartition centrale (13) destinée à modifier le trajet du flux périphérique et du flux central du fluide moteur ; les mécanismes de type ventilateur principaux (2) sont installés devant les dispositifs de guidage (6) au centre à l'intérieur des éléments tubulaires de séparation (12) et sont connectés de manière rigide aux éléments tubulaires de séparation (11), la partie avant de ces mécanismes de type ventilateur principaux (2), où l'écoulement du fluide moteur sort, regarde dans la direction du bord d'attaque de l'aile (7), les mécanismes de type ventilateur principaux (2) sont conçus pour générer l'écoulement central et pour fournir un mouvement stable du fluide moteur dans les éléments tubulaires de séparation (11) à la vitesse requise (Vc) ;
pour chaque aile (7) correspondante il n'y a qu'un seul mécanisme de type ventilateur (2) principal ;
et des mécanismes de type ventilateur périphériques (3) sont installés sur la partie périphérique du dispositif dans la zone de transit entre la structure (1) et les éléments tubulaires de séparation (11) et sont connectés de manière rigide à la structure (1), la partie avant de ces mécanismes de type ventilateur périphériques (3), où l'écoulement du fluide moteur sort, regarde dans la direction du bord d'attaque de l'aile (7), les mécanismes de type ventilateur périphériques (3) sont conçus pour générer un écoulement périphérique et pour fournir un mouvement de cette partie du fluide moteur à une vitesse accrue (Vp) par comparaison avec la vitesse d'écoulement de la partie centrale (Vc) ;
pour chaque aile (7) correspondante il n'y a qu'un seul mécanisme de type ventilateur périphérique (3).

3. Dispositif destiné à générer une force de sustentation comprenant une structure tubulaire (1) ;
des mécanismes de type ventilateur (2, 3) comprenant des moteurs d'entraînement (4) destinés à activer les mécanismes de type ventilateur (2, 3) ; des ailes (7) comprenant un profil aérodynamique pointant à partir du bord d'attaque de l'aile (7) dans la direction d'un fluide moteur soufflé hors du mécanisme de type ventilateur (2, 3) ;
des unités d'ajustement (8) pour l'aile (7), permettant de commander le mouvement du dispositif en modifiant une position de l'aile (7) dans le dispositif autour d'un axe x de l'aile (7), qui est dirigé du bord d'attaque jusqu'au bord de fuite de l'aile (7), et en modifiant un angle d'attaque d'aile pour l'écoulement du fluide moteur ;
des dispositifs de guidage (6), conçus pour diriger l'écoulement du fluide moteur dans le dispositif sur les ailes (7), chacun des dispositifs de guidage (6) est installé devant le bord d'attaque de l'aile (7) ;
un système (10) destiné à maintenir une température de travail requise du fluide moteur ;
une unité de type valve destinée à une connexion à l'environnement extérieur, requise pour un échange de chaleur et de masse avec l'environnement extérieur, au moyen de cette unité de type valve de l'air entre dans le dispositif à partir de l'atmosphère, l'air agit comme un fluide moteur, et comme un agent de refroidissement ;
dans lequel
la structure tubulaire (1) a une forme cylindrique comprenant des éléments d'extrémités (14), les éléments d'extrémités (14) comprennent des surfaces profilées de manière à permettre un retournement de l'écoulement du fluide moteur avec un angle de 180° ;
le dispositif comprend plus d'une aile (7) ;
des éléments tubulaires de séparation (11) positionnés à l'intérieur de la structure (1) devant le bord d'attaque de chaque aile (7) et connectés de manière rigide à la structure (1) pour séparer la zone de l'écoulement du fluide moteur en un trajet d'écoulement périphérique et central ;
la surface de section transversale (S1) de l'écoulement de trajet central à l'intérieur de l'élément tubulaire de séparation (11) est liée à la surface d'aile (S2) suivant un rapport de 0,3 ≤ S1 / S2 ≤ 3,6, où la surface d'aile S2 est la surface de la projection d'aile sur le plan de base de l'aile et est la valeur caractéristique standard ;
les dispositifs de guidage (6) sont installés dans le trajet d'écoulement de sortie à l'intérieur de chaque élément tubulaire de séparation (11) et sont connectés de manière rigide aux éléments tubulaires de séparation (11) ;
des éléments tubulaires de séparation supplémentaires (12) sont installés pour faire tourner le trajet d'écoulement du fluide moteur, à l'intérieur de l'élément tubulaire de séparation supplémentaire (12) le système (10) destiné à maintenir la température de travail requise du fluide moteur est installé ;
la distance L₁ entre le bord de fuite de l'élément tubulaire de séparation (11), où l'écoulement de fluide moteur sort, et le bord d'attaque de l'aile (7) est liée à la corde d'aile b selon le rapport de 0,8b ≤ L₁ ≤ 2,5b ;
la distance L₂ entre le bord de fuite de l'aile (7) et le bord d'attaque de l'élément tubulaire de séparation (11) suivant ou de l'élément tubulaire de séparation supplémentaire (12), où l'écoulement entre, correspond à la valeur, qui est dans les limites de 0,7b ≤ L₂ ≤ 3b ;
la séparation tubulaire (15) est installée dans l'étendue de la zone limitée par la structure (1) et les éléments tubulaires de séparation (11) et connectée de manière rigide à la structure (1), la séparation tubulaire (15) avec les éléments d'extrémités (14) fournissent un trajet en boucle fermée pour le fluide moteur ;
les mécanismes de type ventilateur principaux (2) sont installés devant les dispositifs de guidage (6) au centre à l'intérieur des éléments tubulaires de séparation (12) et sont connectés de manière rigide aux éléments tubulaires de séparation (11), la partie avant de ces mécanismes de type ventilateur principaux (2), où l'écoulement du fluide moteur sort, regarde dans la direction du bord d'attaque de l'aile (7), les mécanismes de type ventilateur principaux (2) sont conçus pour générer l'écoulement central et pour fournir un mouvement stable du fluide moteur dans les éléments tubulaires de séparation (11) à la vitesse requise (Vc) ;
pour chaque aile (7) correspondante il n'y a qu'un seul mécanisme de type ventilateur (2) principal ;
et des mécanismes de type ventilateur périphériques (3) sont installés sur la partie périphérique du dispositif dans la zone de transit entre la séparation tubulaire (15) et les éléments tubulaires de séparation (11) et sont connectés de manière rigide à la séparation tubulaire (15), la partie avant de ces mécanismes de type ventilateur périphériques (3), où l'écoulement du fluide moteur sort, regarde dans la direction du bord d'attaque de l'aile (7), les mécanismes de type ventilateur périphériques (3) sont conçus pour générer un écoulement périphérique et pour fournir un mouvement de cette partie du fluide moteur à une vitesse accrue (Vₚ) par comparaison avec la vitesse d'écoulement de la partie centrale (V_{c}) ;
pour chaque aile (7) correspondante il n'y a qu'un seul mécanisme de type ventilateur périphérique (3).
